# EUROPEAN PATENT SPECIFICATION

(11) **EP 4 374 327 B1**
(45) Date of publication and mention of the grant of the patent: **30.09.2026**
(21) Application number: 22858733.3
(22) Date of filing: 17.08.2022
(51) Int. Cl.: G06T 19/20, G06T 15/10, G06T 7/593, G06F 3/0484, G06F 3/04815, D05B 19/10, D05B 19/08

(54) **GENERATING ENHANCED EXPLODED VIEW FOR DESIGN OBJECT**
ERZEUGUNG EINER ERWEITERTEN EXPLOSIONSANSICHT FÜR EIN ENTWURFSOBJEKT
GÉNÉRATION D'UNE VUE ÉCLATÉE AMÉLIORÉE POUR OBJET DE CONCEPTION

(30) Priority: 17.08.2021 KR 20210107825; 26.11.2021 KR 20210165660; 28.06.2022 KR 20220079018
(43) Date of publication of application: 29.05.2024
(73) Proprietor: CLO Virtual Fashion Inc., Seoul 06236 (KR)
(72) Inventor: KIM, Tae Hyeong, Seoul 06039 (KR); MA, Jae Hwan, Seoul 06039 (KR); LEE, Ho Hyun, Seoul 06039 (KR); HAM, Hyung Gi, Seoul 06039 (KR)
(74) Representative: Gill Jennings & Every LLP
(86) International application number: PCT/KR2022/012251
(87) International publication number: WO 2023/022496

(56) References cited:
- EP-A1- 1 596 338
- US-A1- 2014 176 530
- US-A1- 2014 358 495
- US-A1- 2020 184 687
- US-A1- 2021 166 472
- US-A1- 2021 217 250
- WILMOT LI ET AL: "Automated generation of interactive 3D exploded view diagrams", ACM TRANSACTIONS ON GRAPHICS, vol. 27, no. 3, 1 August 2008 (2008-08-01), pages 1, XP055049074, ISSN: 0730-0301, DOI: 10.1145/1360612.1360700
- ANONYMOUS: "2019 SOLIDWORKS Help - Editing an Explode Step (Assemblies)", 31 December 2018 (2018-12-31), XP093289621, Retrieved from the Internet <URL:https://web.archive.org/web/20181231073124/https://help.solidworks.com/2019/english/SolidWorks/sldworks/t_editing_an_explode_step.htm>
- ANONYMOUS: "SAP user Guide: "Working with Exploded Views"", 25 June 2025 (2025-06-25), XP093289626, Retrieved from the Internet <URL:https://help.sap.com/docs/PLM_EPD/b183c303b8fc4254a08e565cdee4e163/73f2cea864524d0a98377beb2813d3e7.html>

## Description

### Technical Field

This application claims the benefit of Korean Patent Application No. 10-2021-0107825 filed on August 17, 2021, Korean Patent Application No. 10-2021-0165660 filed on November 26, 2021, and Korean Patent Application No. 10-2022-0079018 filed on June 28, 2022.

### Background Art

### 1. Field of the Invention

The invention relates to a method and devices for generating an exploded view for design object simulation.

### 2. Description of the Related Art

In design object simulation, users may finely modify and design each part of a design object through an exploded view. Specifically, in the design object simulation, the exploded view may display a plurality of patterns included in the design object where the patterns are decomposed and separated from each other. Through the exploded view, the users may perform delicate tasks such as sewing lines, choosing materials, and converting measurement for each pattern included in the design object. Wilmot Li ET AL: "Automated generation of interactive 3D exploded view diagrams" published in August 2008 in ACM TRANSACTIONS ON GRAPHICS (ISSN: 0730-0301; DOI: 10.1145/1360612.1360700) teaches an exploded-view layout driven by contact/blocking relations and explosion graphs for disassembly. Therefore, there is an increasing need for generating an exploded view for smooth and efficient designing of a design object.

### Disclosure of Invention

### Solution to Problem

The present invention is defined by the appended independent claims. The invention relates to generating an exploded view of a design object. A first bounding area corresponding to the design object is generated. Second bounding areas, each corresponding to each of pieces in the design object, are generated. Unadjusted distances between a first center of the first bounding area and second centers of the second bounding areas are determined. Adjusted positions of the pieces according to adjusted distances between the first center and the second centers corresponding to the unadjusted distances are determined. The adjusted distances are increased relative to the unadjusted distances. The pieces of the design objects are displayed at the adjusted positions.

In one or more embodiments, wherein the positions are adjusted by determining, as the adjusted distances, the unadjusted distances increased by values that are the first distances multiplied by a predetermined ratio.

In one or more embodiments, the positions are adjusted by converting the unadjusted distances into unit distances; and setting the adjusted distances based on the unit distances.

In one or more embodiments, the positions are adjusted by determining the adjusted distances based on a user selection input.

In one or more embodiments, a distance between a third center of each of third bounding areas corresponding to each of a plurality of design elements in a piece of the plurality of pieces and a second center of the piece is adjusted.

In one or more embodiments, an adjusted distance between the first center and one of the second vectors is set to be greater than a distance between the second center and the third center.

In one or more embodiments, the plurality of pieces are restored from the adjusted positions to unadjusted positions according to the unadjusted distances when a user selection input is received. The the design object and each of pieces in the design object are displayed at the unadjusted positions.

According to the invention, selection of at least one of the pieces or design elements in each of the pieces in the exploded view is received. The pieces or the design elements are displayed in the adjusted positions in the exploded view. Design data corresponding to at least one of the selected piece or design element is modified. The design data includes data about at least one of a pattern, a material, a supplemental material, or a measurement of the selected piece or the selected design element.

In one or more embodiments, the selected piece or the selected design element adjusted according to the modified design data is displayed in real time.

In one or more embodiments, at least one of the pieces or one of the design elements selected based on a user selection input is displayed in the exploded view with the at least one of the pieces or one of the design elements at positions that are adjusted.

In one or more embodiments, a transparency of at least one of the pieces or one of the design elements selected is decreased based on a user selection input in the exploded view with the at least one of the pieces or one of the design elements at positions that are adjusted.

In one or more embodiments, a modification object for modifying design data and the exploded view are displayed on a screen. The exploded view is changed based on modification of the design data of the modification object.

### Brief Description of Drawings

These and/or other aspects, features, and advantages of the invention will become apparent and more readily appreciated from the following description of example embodiments, taken in conjunction with the accompanying drawings of which:
FIG. 1 is a diagram illustrating a method of adjusting positions of a plurality of pieces through a bounding area according to an example embodiment;
FIG. 2 is a diagram illustrating a specific method of adjusting positions of a plurality of pieces according to an example embodiment;
FIG. 3 is a diagram illustrating a method of adjusting positions of a plurality of design elements after adjusting positions of a plurality of pieces according to an example embodiment;
FIG. 4 is a diagram illustrating a distance between pieces according to a method of adjusting positions of a plurality of pieces according to an example embodiment;
FIG. 5 is a diagram illustrating before and after decomposition of a design object according to an example embodiment;
FIG. 6 is a diagram illustrating a method of modifying design data in an exploded view according to an example embodiment;
FIG. 7 is a diagram illustrating a method of changing a display of a selected design element or piece according to example embodiment;
FIG. 8 is a flowchart illustrating a method of generating an exploded view according to an example embodiment; and
FIG. 9 is a block diagram illustrating an electronic device according to example embodiments.

### Mode for the Invention

The following structural or functional descriptions of example embodiments described herein are merely intended for the purpose of describing the example embodiments described herein and may be implemented in various forms. However, it should be understood that these example embodiments are not construed as limited to the illustrated forms.

Although terms of "first," "second," and the like are used to explain various components, the components are not limited to such terms. These terms are used only to distinguish one component from another component. For example, a first component may be referred to as a second component, or similarly, the second component may be referred to as the first component within the scope of the present disclosure.

When it is mentioned that one component is "connected" or "accessed" to another component, it may be understood that the one component is directly connected or accessed to another component or that still other component is interposed between the two components. In addition, it should be noted that if it is described in the specification that one component is "directly connected" or "directly joined" to another component, still other component may not be present therebetween. Likewise, expressions, for example, "between" and "immediately between" and "adjacent to" and "immediately adjacent to" may also be construed as described in the foregoing.

As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. When describing the example embodiments with reference to the accompanying drawings, like reference numerals refer to like components and a repeated description related thereto will be omitted.

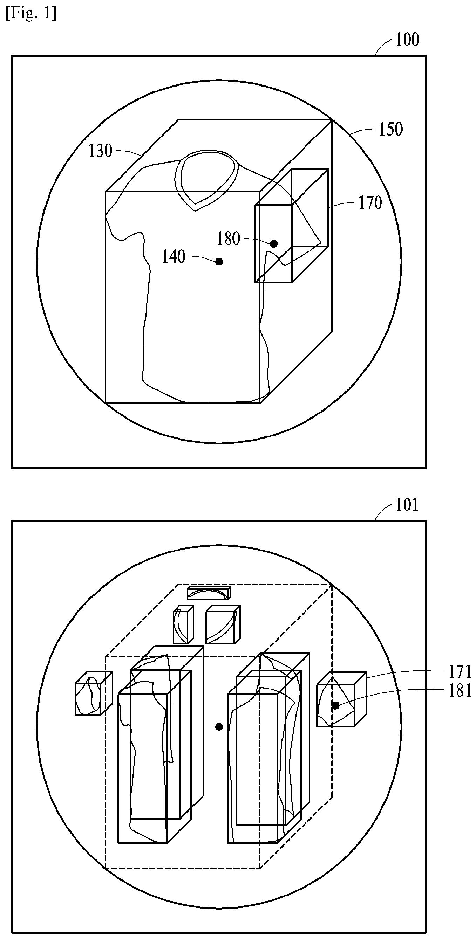

FIG. 1 is a diagram illustrating a method of adjusting positions of a plurality of pieces through a bounding area, according to an example embodiment. Although the design object appears to be three-measuremental when worn by a person, in reality, it may be a combination of fabric pieces cut according to a two-measuremental pattern. Accordingly, in the design object simulation, the design object may be expressed as a plurality of patterns. And the patterns may be modeled as a polygon mesh including a plurality of polygons.

A design object according to an example embodiment may be an image obtained by virtualizing a designed article. The designed article is not limited to a specific article, and may in general refer to all designable articles. For example, a user (e.g., designer) who designs clothes may design digital versions of clothes. Virtualized sample clothes for manufacturing physical clothes may be designed online. Such virtualized sample clothes may be a design object. The design objects may also be, among others, curtains, shoes, bags, gloves, furniture, toys, and the like. For example, the T-shirt and pants illustrated in FIG. 1 may be a design object 100 which is a virtualized shirt designed as a garment. The detailed description of the above-described design object is only an example, and the present disclosure is not limited thereto.

Hereinafter, a specific method of generating an exploded view of a design object will be described. In FIG. 1, the design object 100 is shown in an exploded view 101 which includes a first bounding area 130, a first bounding sphere 150, a first vector 140, a second bounding area 170, a second vector 180, a position adjusted second bounding area 171 and a position adjusted second vector 181.

The design object 100 according to an example embodiment may be a virtual design object. A processor 910 according to an example embodiment may generate the first bounding area 130 corresponding to the design object 100. The design object 100 according to an example embodiment may include clothes. Accordingly, the processor 910 may generate the first bounding area 130 corresponding to the clothes. For example, the clothes may include a T-shirt. As illustrated in FIG. 1, the processor 910 may generate the first bounding area 130 corresponding to the clothes. The design object 100 according to other embodiments may be a bag, gloves, shoes, or the like.

The bounding area according to an example embodiment may be an area have a size minimized to include all points of the object. For example, the first bounding area 130 may be an area having a size minimized to include all points of the clothes. The bounding area according to an example embodiment may have a form of a bounding box and/or a bounding sphere.

The processor 910 according to the invention generates a first bounding sphere 150 corresponding to the design object 100. The bounding sphere according to an example embodiment may refer to a sphere having a size including all points of the object. The bounding sphere according to another example embodiment may be a sphere generated based on the bounding box. For example, the processor 910 may generate a bounding sphere based on eight vertices of the bounding box. The processor 910 may generate the bounding sphere such that eight vertices of the bounding box are tangent to the face of the sphere. Accordingly, the first bounding sphere 150 may be generated based on the first bounding area 130.

The processor 910 according to the invention generates the second bounding areas 170 corresponding to each of a plurality of pieces included in the design object. A piece according to an example embodiment may refer to at least a part of a design object. For example, when the design object is single pieced, the piece may be generated by dividing the piece into a plurality of areas. In another example, when the design object is a dress and a bag, the processor 910 may divide the design object into a dress and a bag, separately. The piece may include a plurality of areas of a dress and/or a plurality of areas of a bag. In another example, when the design object is a T-shirt, the piece may be divided into a body, arm sleeves, and a collar. In yet another example, when the design object is pants, it may be divided into a leg portion, a trouser end, a trouser pocket, or a bar waist portion. The second bounding area 170 according to an example embodiment may refer to a bounding area corresponding to one piece.

A design element according to an example embodiment constitutes a design object and may be referred to as a part of a piece. The design element may include at least one of a pattern or a supplemental material.

The processor 910 may obtain a distance between the first vector at the center of the first bounding area 130 and the second vector at the center of the at least one second bounding area 170. The exploded view 101 in FIG. 1 may be a diagram illustrating a state in which the positions of the plurality of pieces are all adjusted. The exploded view 101 according to another example embodiment may be a diagram illustrating a state in which the positions of a plurality of design elements included in the piece are all adjusted. Accordingly, the processor 910 may calculate distances between the first vector and the second vectors in the design object 100. The coordinates of the center of the first bounding area 130 may be expressed as a first vector. The coordinates of the center of the second bounding area 170 may be expressed as a second vector. In FIG. 1, only the second bounding area corresponding to one piece is illustrated for convenience of description, and a second bounding area may be present for each of the plurality of pieces. The processor 910 may determine an unadjusted distance between the first vector and the second vector by calculating the distance between the first vector and the second vector. The processor 910 according to an example embodiment may calculate a distance between the first vector 140 and the second vector 180 in the design object 100 of FIG. 1.

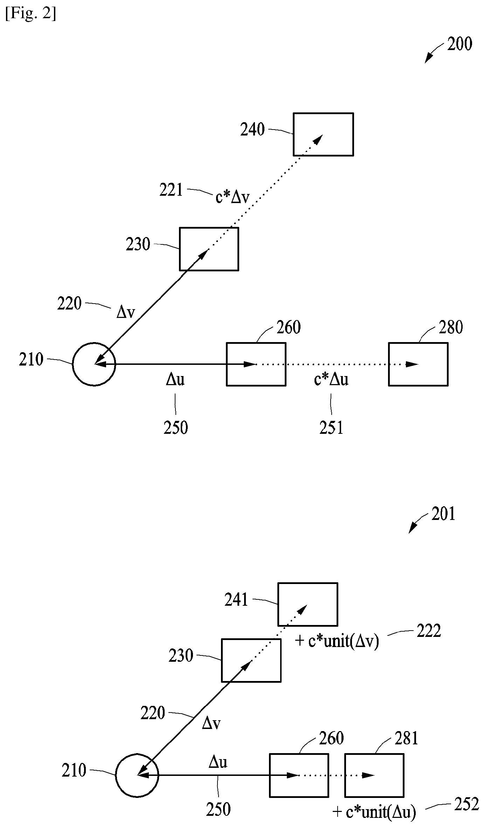

The processor 910 may determine adjust positions of the plurality of pieces by increasing the distances between the first vector and the second vectors based on the unadjusted distance (e.g., the distance between the first vector 140 and the second vector 180). For example, the processor 910 may calculate the distance between the first vector 140 and the second vector 180. In addition, the processor 910 may adjust the distance between the first vector 140 and the second vector 180 based on the calculated distance between the first vector 140 and the second vector 180. A specific method of increasing the distances between the first vector and the second vectors according to an example embodiment will be described in detail below with reference to FIG. 2.

A first method 200 for increasing distances between the first vector and the second vectors according to an example embodiment may be as follows. The processor 910 may determine the adjusted distances between the first vector and the second vectors based on values obtained by multiplying the unadjusted distances between the first vector and the second vectors by a predetermined ratio. In FIG. 2, a first vector 210, a second vector 1 230, and/or a second vector 2 260 are illustrated. Further, Δυ220 may refer to a displacement difference (or distance) between the first vector 210 and the second vector 1 230. △µ 250 may refer to a displacement difference (or distance) between the first vector 210 and the second vector 2 260. In FIG. 2, the predetermined ratio may be expressed as c. For example, c may be a constant greater than one (1). The processor 910 may adjust the position of the second vector 1 230 so that the second vector 1 230 is located at a distance of c * △υ 221 from the first vector 210. Accordingly, the position of the second vector1 230 may be adjusted to the adjusted position 1 240 of the second vector 1. In another example, the processor 910 may adjust the position of the second vector 2 260 so that the second vector 2 260 is located at an adjusted distance of c * △υ 251 from the first vector 210. As the position of the second vector is adjusted, the second bounding area corresponding to the second vector may be adjusted. Furthermore, the position of the piece corresponding to the second bounding area may be adjusted. In this way, the processor 910 may adjust the positions of the pieces so that each piece moves away from each other based on the center point of the design object 100. When the processor 910 adjusts the positions of the pieces through the first method 200, as the second vector is further away from the first vector, the processor 910 may adjust the position of the second vector to be more distant in proportion to the distance from the first vector.

A second method 201 for increasing the distances between the first vector and the second vectors according to another example embodiment may be as follows. The processor 910 may convert the unadjusted distance between the first vector and the at least one second vector into a unit distance, and then increase the distances between the first vector and the second vectors based on the unit distance. In FIG. 2, a first vector 210, a second vector 1 230, and/or a second vector 2 250 are illustrated. In addition, △υ 220 may refer to a displacement difference (or distance) between the first vector 210 and the second vector 1 230. Δυ 250 may refer to a displacement difference (or distance) between the first vector 210 and the second vector 2 250. In FIG. 2, the predetermined ratio may be expressed as c. For example, c may be a constant greater than one (1). The processor 910 according to an example embodiment may convert △υ 220 into unit(△υ), which is a unit distance. The unit distance according to an example embodiment may be a distance obtained by converting a distance value into a specific unit. For example, it may be expressed as unit distance = log(distance).

The above-described unit distance is merely an example, and the present disclosure is not limited thereto. The processor 910 may convert △υ 250 into unit(△υ), which is a unit distance. The processor 910 may position the second vector at an adjusted distance away from the first vector by a unit distance added to the unadjusted distance between the first vector and the second vector (e.g., △υ 220 or △µ 250). Alternatively, the processor 910 may position the second vector at an adjusted distance away from the first vector by (predetermined ratio) 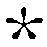 (unit distance) added to the unadjusted distance between the first vector and the second vector (e.g., △υ 220 or △µ 250). The processor 910 may multiply each unit distance by a predetermined ratio (e.g., c). For example, the processor 910 may adjust the position of the second vector 1 230 to a position away from the first vector 210 by △υ + c 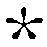 unit(△υ) 222. In addition, the adjusted position may be determined as the adjusted position 2 241 of the second vector 1. In another example, the processor 910 may adjust the position of the second vector 2 260 to a position at an adjusted distance away from the first vector 210 by △µ + c 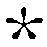 unit(△µ) 252. In addition, the adjusted position may be determined as the adjusted position 2 281 of the second vector 2.

When the processor 910 adjusts the distance between the first vector and the second vector using the second method 201, the adjusted distance change amount may be smaller than when the first method 200 is used. For example, when the processor 910 uses the first method 200, the pieces or design elements that are further away from the first vector may be adjusted to be distanced further from the first vector than when using the second method 201. Accordingly, when the processor 910 uses the first method 200, the pieces and/or design elements may be scattered further away in the exploded view 101. This is because the adjusted distance increases in proportion to the distance between the first vector and the second vector. When the processor 910 uses the second method 201, pieces and/or design elements may be scattered with smaller distances than when the first method 200 is used. This is because the position of the pieces and/or design elements are adjusted by a value obtained by adding a unit distance to the distance between the first vector and the second vector.

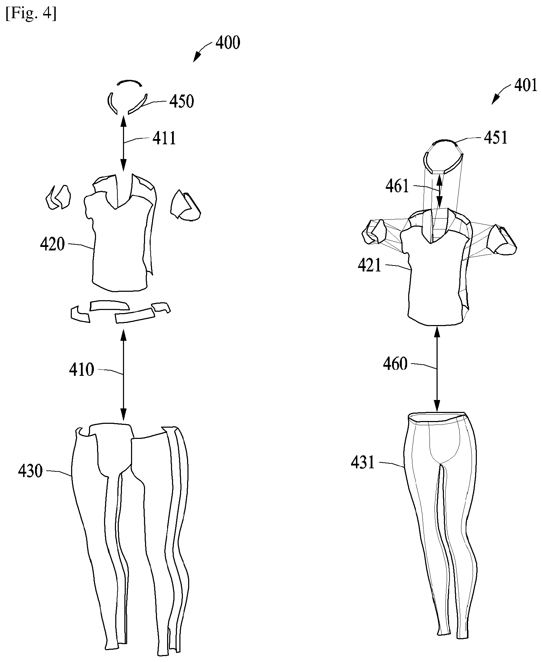

In FIG. 4, a screen 400 where the distance is adjusted using the first method, a piece 1 450, a piece 2 420, a piece 3 430, a distance 411 between the piece 1 450 and the piece 2 420, a distance 410 between the piece 2 420 and the piece 3 430, a screen 401 where the distance is adjusted using the second method, a piece 1' 451, a piece 2' 421, a piece 3' 431, a distance 461 between the piece 1' 451 and the piece 2' 421, and a distance 460 between the piece 2' 421 and the piece 3' 431 are illustrated.

Referring to FIG. 4, in the screen 400 where the distance is adjusted using the first method, a distance 411 between a piece 1 450 and a piece 2 420 and a distance 410 between a piece 2 420 and a piece 3 430 are illustrated. In the screen 401 where the distance is adjusted using the second method, a distance 461 between a piece 1' 451 and a piece 2' 421 and a distance 460 between a piece 2' 421 and a piece 3' 431 are illustrated. The distance 411 between the piece 1 450 and the piece 2 420 may be greater than the distance 461 between the piece 1' 451 and the piece 2' 421 . In addition, the distance 410 between the piece 2 420 and the piece 3 430 may be greater than the distance 460 between the piece 2' 421 and the piece 3' 431.

The processor 910 may generate the exploded view 101 by adjusting the positions of the plurality of pieces. Referring to FIG. 1, based on the first vector 140, the plurality of pieces may be separated from each other by adjusted distances.

The processor 910 may adjust the distance between the second vector and the first vector of the second bounding area corresponding to the piece determined based on the user selection input. In addition, the processor 910 may maintain the distance between the second vector and the first vector corresponding to each of the pieces other than the pieces determined based on the user selection input. In this way, the processor 910 displays only the pieces desired by the user at a distance separated away from other pieces, so that the user may easily modify and check the designs of the pieces.

According to an example embodiment, the user may modify or add a sewing line in the exploded view through design object simulation. In this case, if the plurality of patterns included in the design object are all disassembled and scattered, the graphic interface may look distracting and may hinder the focus of the user. Accordingly, the processor 910 may adjust the distance by disassembling only the portion selected by the user (e.g., the selected piece or the selected design element), and the remaining portion may maintain the unadjusted distance. Specifically, when the user selects a piece, the processor 910 may adjust the distance between the second vector and the first vector of the corresponding piece. In addition, the processor 910 may maintain the unadjusted distance between the second vector and the first vector of another piece. Furthermore, the processor 910 may also adjust the distance between the third vectors and the second vectors of the third bounding area corresponding to the plurality of design elements included in the corresponding piece. In another example, when the user selects a design element, the processor 910 may adjust the distance between the third vector and the second vector of the corresponding design element. In addition, the distance between the third vector and the second vector of the remaining design elements may be maintained.

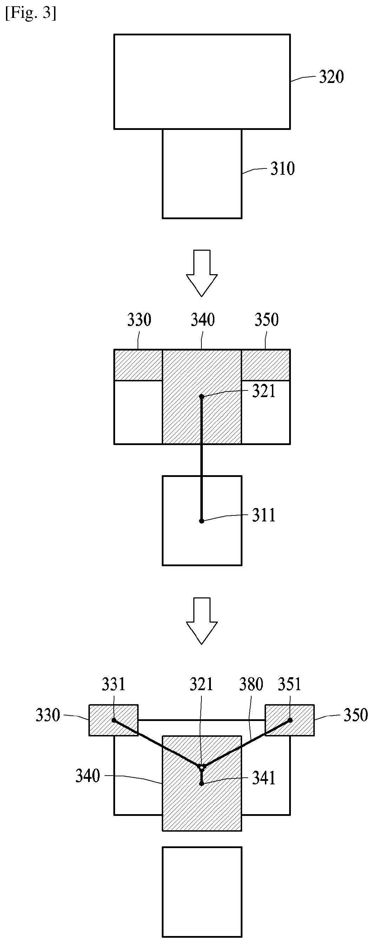

In another embodiment, the processor 910 may generate the exploded view 101 by adjusting the positions of the plurality of pieces and then adjusting the positions of the plurality of design elements included in the pieces. Hereinafter, a method of adjusting positions of a plurality of design elements will be described in detail with reference to FIG. 3.

The processor 910 may adjust the positions of the plurality of pieces by increasing distances between the first vector and the second vectors. In addition, the processor 910 may adjust the distance between the third vector which is a center of each of the third bounding areas corresponding to the plurality of design elements included in the piece and the second vector of the piece. The design element may be at least a part of the piece. For example, when the piece is a body part of a T-shirt, the piece may include a front pattern and a back pattern.

In FIG. 3 according to an example embodiment, a second bounding area 1 310 and a second bounding area 2 320 are illustrated. The processor 910 may increase the distance between the second bounding area 1 310 and the second bounding area 2 320 based on the above-described method.

The second bounding area 2 320 according to an example embodiment may include a pattern 1 330, a pattern 2 340, and a pattern 3 350. In addition, a second vector corresponding to the second bounding area 1 310 may be a point 1 311, and a second vector corresponding to the second bounding area 2 320 may be a point 2 321.

In FIG. 3 according to an example embodiment, a center point of each pattern may be illustrated. For example, the center point of the pattern 1 330 may be the point 3 331. The point 3 331 may be a third vector indicating a center of a third bounding area corresponding to the pattern 1 330. The center point of the pattern 2 (340) may be a point 4 (341). The point 4 341 may be a third vector which is a center of a third bounding area corresponding to the pattern 2 340. And the center point of the pattern 3 350 may be the point 5 351. The point 5 351 may be a third vector which is a center of a third bounding area corresponding to the pattern 3 350.

The processor 910 may increase the distance between the point 3 331 which is the third vector of the pattern 1 330 and the point 2 321 which is the second vector of the second bounding area 2 320. The processor 910 may increase the distance between the point 4 341 which is the third vector of the pattern 2 340 and the point 2 321 which is the second vector of the second bounding area 2 320 . The processor 910 may increase the distance between the point 5 351 which is the third vector of the pattern 3 350 and the point 2 321 which is the second vector of the second bounding area 2 320. In this way, the positions of the pattern 1 330, the pattern 2 340, and the pattern 3 350 included in the second bounding area 2 320 may be adjusted while being away from each other.

By decomposing design elements into units (e.g., adjusting the distance between the second vector and the third vector) after decomposing the design object 100 into pieces (e.g., adjusting the distance between the first vector and the second vector), the user may perceive an exploded view of the design object in an orderly manner.

The distance between the first vector and the second vector according to an example embodiment may be set to be greater than the distance between the second vector and the third vector. For example, the distance between the first vector and the second vector (e.g., point 321 in FIG. 3) may be set to be greater than the distance between the second vector (e.g., point 321 in FIG. 3) and the third vector (e.g., point 331, point 341, or point 351 in FIG. 3). In this way, when the distance of at least some of the pieces of the design object is adjusted (when only the pieces selected by the user are decomposed from the design object), an issue of overlapping between the piece with the adjusted distance and the piece whose distance not adjusted may be avoided.

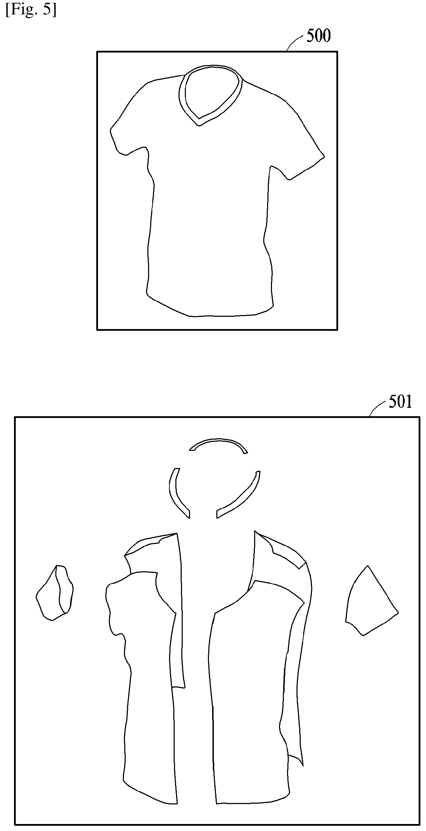

The processor 910 may restore the positions of the plurality of pieces from adjusted positions to their unadjusted positions based on the user selection input. The user selection input according to an example embodiment may include "exploded view on" and/or "exploded view off". Referring to FIG. 5, an exploded view "off" state screen 500 and an exploded view "on" state screen 501 are illustrated. The exploded view "on" state screen 501 may show the position of the second bounding area adjusted based on the first bounding area. The exploded view "off" state screen 500 according to an example embodiment may show the second bounding area restored to a position before the adjustment. The processor 910 according to another example embodiment may restore the positions of the design elements to their original positions based on the user selection input.

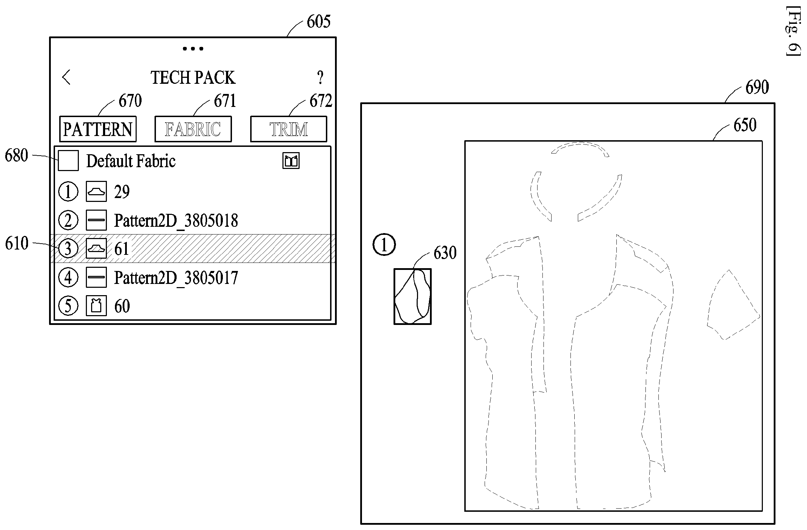

The processor 910 selects at least one of a piece and a design element based on a user selection input in an exploded view in which the positions of the plurality of pieces or the positions of the plurality of design elements are adjusted. The processor 910 modifies design data corresponding to at least one of the selected piece or the design element. Modification of design data in an exploded view is specifically described below with reference to FIG. 6. The processor 910 may select a design element (e.g., arm sleeve pattern 630) based on the user selection input. In this case, the user may modify the design data corresponding to the arm sleeve pattern 630. For example, the user may change the pattern 670 of the arm sleeve pattern 630. In another example, the user may change the material 671 of the arm sleeve pattern 630. In yet another example, the user may change the supplemental material 672 of the arm sleeve pattern 630. The processor 910 may receive the design data modification information and modify the design data corresponding to the design element (e.g., the arm sleeve pattern 630).

One or more design data associated with the design object may be data required to generate an article corresponding to the design object. The design data may be data for producing a virtualized sample article in an actual process. The design data may be related to at least one of the pattern 670, the material 671, the supplemental material 672, or measurements for each of the articles for producing the article. The pattern 670 may refer to cutting of at least a portion constituting the article. For example, the pattern 670 may refer to flat cutting of each of the front, back, sleeves, and parts constituting the T-shirt. The material 671 may refer to a raw material constituting the article. For example, in the case of clothes, the material 671 may refer to cotton, wool, velvet, or the like. The supplemental material 672 may be a material used as an auxiliary to constitute the article. For example, a material mainly used to constitute clothes may be cloth, and a supplemental material used as an auxiliary may be a button, a logo, a zipper, and the like. A measurement may be a value for describing a material or supplemental material used to constitute an article. For example, the measurement may be the length of each corner of the pattern for describing the pattern, the diameter of a button, and the like. For example, the design data may be on four patterns constituting the T-shirt, the material constituting each part of the T-shirt, buttons and logos running on the T-shirt, and size or length of each. The detailed description of the above-described design data is merely an example, and the present disclosure is not limited thereto.

FIG. 6 is a diagram illustrating a method of modifying design data in an exploded view according to an example embodiment. In FIG. 6, a modification object 605, an arm sleeve pattern object 610, an arm sleeve pattern 630, other patterns 650 except the arm sleeve pattern, a pattern 670, a material 671, a subsidiary material 672, a material object 680 and an exploded view 690 are illustrated. The modification object 605 may refer to an object for modifying design data. The modification object 605 may include an object capable of modifying the pattern 670, the material 671, and the subsidiary material 672.

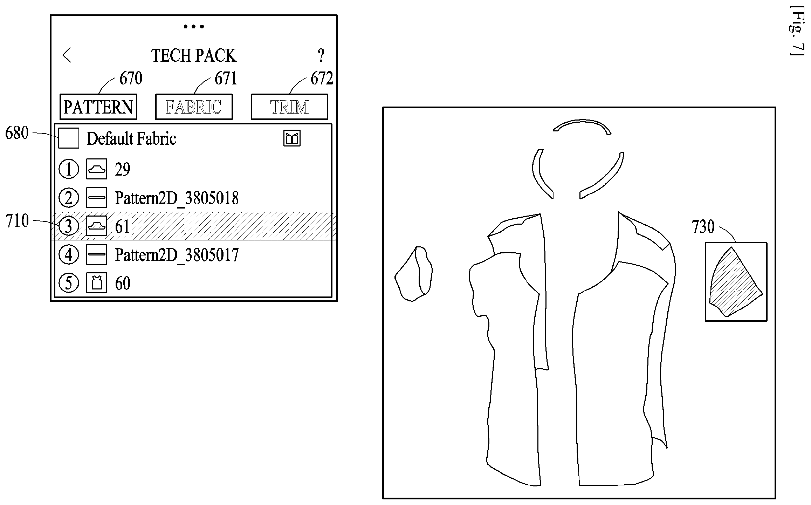

In the exploded view in which the positions of the plurality of pieces or the design elements are adjusted, display of a piece or design element using at least one of a material, a pattern, and a supplemental material selected based on the user selection input may be changed. The user selection input according to an example embodiment may be information input through a modification object. The processor 910 may change the display of a piece or design element using at least one of a material, a pattern, and a supplemental material selected through the modification of one or more objects in the exploded view. In this way, the user may easily identify a piece or design element using at least one of a material, a pattern, and a supplemental material in the exploded view. For example, when the material object 680 is selected in FIG. 7, the processor 910 may change the display of the piece or design element that uses the material.

The electronic device 900 according to an example embodiment may output the modification object 605 and the exploded view 690 on the screen. The electronic device 900 may reflect the design data modification information (received through the modification object) to the exploded view 690. Specifically, the electronic device 900 may deform the exploded view 690 based on the design data modification information. For example, when a button, which is a supplemental material, is changed to a button of a different design, the electronic device 900 may display the changed button through the exploded view 690. In this way, the user may view the exploded view 690 in which the modifications of the design data are reflected in real time through the screen.

FIG. 7 is a diagram illustrating a method of changing a display of a selected design element or piece, according to example embodiment. In FIG. 7, an arm sleeve pattern object 710, an arm sleeve pattern 730, a pattern 670, a material 671, a supplemental material 672, and a material object 680 are illustrated.

As illustrated in FIG. 7, when the design element (e.g., arm sleeve pattern 730) uses a material corresponding to the material object 680, the display of the design element (e.g., arm sleeve pattern 730) may be changed. For example, the color of the arm sleeve pattern 730 may be displayed in a manner different from other design elements, or the transparency may be set lower relative to that of other design elements. Similarly, the processor 910 may perform the above-described operation for the pattern or supplemental material. When the user's cursor passes over (e.g., hovers) a piece or design element displayed in the exploded view, the processor 910 may change the display of the corresponding piece or design element. For example, when the cursor passes over the arm sleeve pattern 730, the processor 910 may change how the arm sleeve pattern 730 is displayed. For example, when the cursor passes the arm sleeve pattern 730, the electronic device 900 may change the display of the arm sleeve pattern 730.

In the exploded view in which the positions of the plurality of pieces are adjusted or the positions of the plurality of design elements are adjusted, the display of the selected piece or design element may be changed based on the user selection input. For example, the design element selected by the user in FIG. 6 may be the arm sleeve pattern object 610. In the exploded view, the display of the arm sleeve pattern 630 corresponding to the arm sleeve pattern object 610 may be changed. The processor 910 according to another example embodiment may lower the transparency of the selected piece or design element based on the user selection input. For example, the design element selected by the user in FIG. 6 may be the arm sleeve pattern object 610. In the exploded view, the transparency of the arm sleeve pattern 630 corresponding to the arm sleeve pattern object 610 may be set lower than other design elements. In this way, the arm sleeve pattern 630 may be shown clearly, while other patterns 650 may be shown in a faint manner, as illustrated in FIG. 6.

The processor 910 may add an annotation in an exploded view "off" state. An annotation according to an example embodiment may be an object displayed overlaid onto a design object. For example, the annotation may be in various forms such as text and a figure, and may be used by users to leave a comment on a design object. In another embodiment, the processor 910 may add an annotation in an exploded view "on" state.

When a rendering selection input is received, the processor 910 may switch the exploded view "on" state to the exploded view "off" state and output the rendering result on the screen.

Through the method according to the present disclosure, the user may more closely and easily observe the editing target as units of design elements constituting the design object. In addition, when an exploded view using the relative distance of the present disclosure is used, the user may more efficiently identify an important part or a target part for further work in a design object with a large number of design elements.

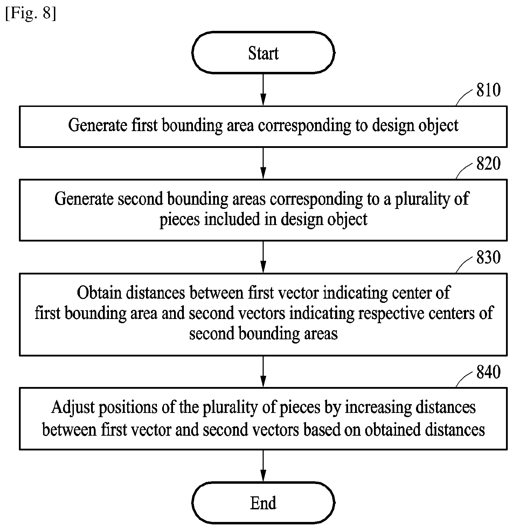

FIG. 8 is a flowchart illustrating a method of generating an exploded view according to an example embodiment. The electronic device may generate 810 a first bounding area corresponding to the design object.

The electronic device 900 may generate 820 second bounding areas corresponding to each of the plurality of pieces included in the design object. The electronic device 900 may determine 830 unadjusted distances between the first vector indicating the center of the first bounding area and the second vectors indicating the respective centers of the second bounding areas.

The electronic device 900 according to an example embodiment may adjust 840 the positions of the plurality of pieces by increasing distances between the first vector and the second vectors based on the obtained distances. The electronic device 900 according to an example embodiment may increase the distances between the first vector and the second vectors based on a value obtained by multiplying the unadjusted distances between the first vector and the second vectors by a predetermined ratio. The electronic device 900 may convert the distances between the first vector and the second vectors into unit distances, and then increase the distances between the first vector and the second vectors based on the unit distances. The electronic device 900 according to an example embodiment may adjust the distance between the second vector and the first vector of the second bounding area corresponding to the piece determined based on the user selection input.

The electronic device 900 may adjust a distance between a third vector which is a center of each of the third bounding areas corresponding to a plurality of design elements included in the piece and a second vector of the piece.

The electronic device 900 may restore the plurality of pieces whose positions have been adjusted based on a user selection input to their original positions.

The electronic device 900 may select at least one of a piece and a design element based on a user selection input in an exploded view in which the positions of the plurality of pieces or the design elements are adjusted. The electronic device 900 according to an example embodiment may modify design data corresponding to at least one of the selected piece and design element.

In the exploded view in which the positions of the plurality of pieces are adjusted or the positions of the plurality of design elements are adjusted, the electronic device 900 may change how at least one piece or design element using at least one of a material, a pattern, and a supplementary material selected based on the user selection input is displayed. The electronic device 900 may, for example, lower the transparency of the selected piece or design element based on the user selection input.

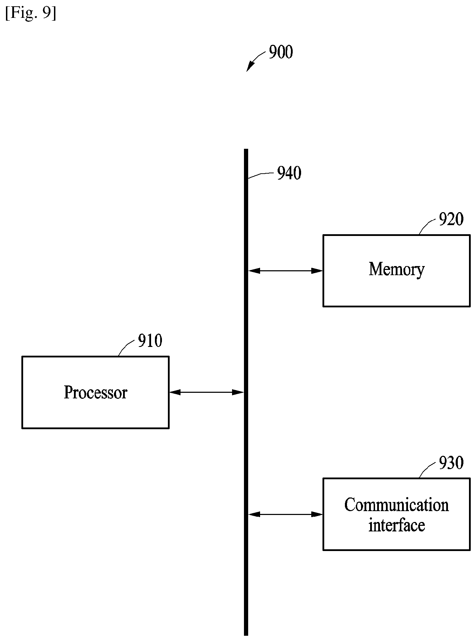

FIG. 9 is a block diagram illustrating an electronic device according to example embodiments. FIG. 9 is a block diagram illustrating an electronic device according to an example embodiment. The electronic device according to an example embodiment may be a server. The electronic device according to another example embodiment may be a terminal (e.g., a mobile terminal, a laptop, a desktop, etc.). Referring to FIG. 9, an electronic device 900 according to an example embodiment includes a memory 920, a processor 910, and a communication interface 930. The memory 920, the processor 910, and the communication interface 930 may be connected to each other through a communication bus 940.

The memory 920 may store various information generated in the process of the above-described processor 910. In addition, the memory 920 may store various data and programs. The memory 920 may include a volatile memory or a non-volatile memory. The memory 920 may include a mass storage medium such as a hard disk to store various data.

The processor 910 may be a hardware-implemented device having a circuit having a physical structure for executing desired operations. For example, desired operations may include code or instructions included in a program. For example, a classification unit implemented in hardware may include a microprocessor, a central processing unit (CPU), a graphic processing unit (GPU), a processor core, a multi-core processor, a multi-core processor, a multiprocessor, an application-specific integrated circuit (ASIC), a field programmable gate array (FPGA), a neural processing unit (NPU), and the like.

The processor 910 may execute a program and control the electronic device. The program code executed by the processor 910 may be stored in the memory 920 .

The example embodiments described herein may be implemented using hardware components, software components, or a combination thereof. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The method according to the above-described example embodiments may be recorded in non-transitory computer-readable media including program instructions to implement various operations which may be performed by a computer. The media may also include, alone or in combination with the program instructions, data files, data structures, and the like. The program instructions recorded on the media may be those specially designed and constructed for the purposes of the example embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. The media may be transfer media such as optical lines, metal lines, or waveguides including a carrier wave for transmitting a signal designating the program command and the data construction. Examples of program instructions include both machine code, such as code produced by a compiler, and files containing higher level code that may be executed by the computer using an interpreter.

The described hardware devices may be configured to act as one or more software modules in order to perform the operations of the above-described example embodiments, or vice versa.

While this disclosure includes example embodiments, it will be apparent to one of ordinary skill in the art that various changes in form and details may be made in these example embodiments without departing from the spirit and scope of the claims and their equivalents. Suitable results may be achieved if the described techniques are performed in a different order, and/or if components in a described system, architecture, device, or circuit are combined in a different manner and/or replaced or supplemented by other components or their equivalents.

Therefore, the scope of the invention is defined not by the detailed description, but by the claims and all variations within the scope of the claims are to be construed as being included in the invention.

## Claims

1. A method of generating an exploded view of a design object, the method comprising:
generating a first bounding area corresponding to the design object;
generating second bounding areas, each corresponding to each of pieces in the design object;
determining unadjusted distances between a first center of the first bounding area and second centers of the second bounding areas;
determining adjusted positions of the pieces according to adjusted distances between the first center and the second centers corresponding to the unadjusted distances, the adjusted distances increased relative to the unadjusted distances;
displaying the pieces of the design objects at the adjusted positions;
selecting at least one of a piece and a design element based on a user selection input in the exploded view in which the positions of a plurality of the pieces or the positions of the plurality of the design elements are adjusted, wherein a design element is at least a part of a piece; and
modifying design data corresponding to at least one of the selected piece or design element, wherein the design data includes data about at least one of a pattern, a material, a supplemental material, or a measurement of the selected piece or the selected design element.

2. The method of claim 1, wherein the adjusting of the positions comprises determining, as the adjusted distances, the unadjusted distances increased by values that are the first distances multiplied by a predetermined ratio.

3. The method of claim 1, wherein the adjusting of the positions comprises:
converting the unadjusted distances into unit distances; and
setting the adjusted distances based on the unit distances.

4. The method of claim 1, wherein the adjusting of the positions comprises determining the adjusted distances based on a user selection input.

5. The method of claim 1, further comprising:
adjusting a distance between a third center of each of third bounding areas corresponding to each of a plurality of design elements in a piece of the plurality of pieces and a second center of the piece.

6. The method of claim 5, wherein an adjusted distance between the first center and one of the second centers is set to be greater than a distance between the second center and the third center.

7. The method of claim 1, further comprising:
restoring the plurality of pieces from the adjusted positions to unadjusted positions according to the unadjusted distances, responsive to receiving a user selection input; and
displaying the design object and each of pieces in the design object at the unadjusted positions.

8. The method of claim 1, further comprising:
displaying the selected piece or the selected design element adjusted according to the modified design data in real time.

9. The method of claim 1, further comprising:
displaying at least one of the pieces or one of the design elements selected based on the user selection input in the exploded view in which the positions of the plurality of the pieces or the positions of the plurality of the design elements are adjusted.

10. The method of claim 1, the displaying comprising:
displaying at least one of the pieces or one of the design elements selected based on the user selection input in the exploded view in which the positions of the plurality of the pieces or the positions of the plurality of the design elements are adjusted based on a decreased transparency.

11. The method of claim 1, further comprising:
displaying a modification object for modifying design data and the exploded view on a screen; and
changing the exploded view based on modification of the design data of the modification object.

12. A non-transitory computer-readable storage medium storing instructions that, when executed by a processor, cause the processor to:
generate a first bounding area corresponding to a design object;
generate second bounding areas, each corresponding to each of pieces in the design object;
determine unadjusted distances between a first center of the first bounding area and second centers of the second bounding areas; and
determine adjusted positions of the pieces according to adjusted distances between the first center and the second centers corresponding to the unadjusted distances, the adjusted distances increased relative to the unadjusted distances;
display the pieces of the design objects at the adjusted positions;
select at least one of a piece and a design element based on a user selection input in the exploded view in which the positions of a plurality of the pieces or the positions of the plurality of the design elements are adjusted, wherein a design element is at least a part of a piece; and
modify design data corresponding to at least one of the selected piece or design element, wherein the design data includes data about at least one of a pattern, a material, a supplemental material, or a measurement of the selected piece or the selected design element.

13. An electronic device for generating an exploded view of a design object, the electronic device comprising a processor, the processor configured to:
generate a first bounding area corresponding to the design object;
generate second bounding areas, each corresponding to each of pieces in the design object;
determine unadjusted distances between a first center of the first bounding area and second centers of the second bounding areas; and
determine adjusted positions of the pieces according to adjusted distances between the first center and the second centers corresponding to the unadjusted distances, the adjusted distances increased relative to the unadjusted distances;
display the pieces of the design objects at the adjusted positions;
select at least one of a piece and a design element based on a user selection input in the exploded view in which the positions of a plurality of the pieces or the positions of the plurality of the design elements are adjusted, wherein a design element is at least a part of a piece; and
modify design data corresponding to at least one of the selected piece or design element, wherein the design data includes data about at least one of a pattern, a material, a supplemental material, or a measurement of the selected piece or the selected design element.

## Patentansprüche

1. Verfahren zum Erzeugen einer Explosionsansicht eines Entwurfsobjekts, wobei das Verfahren umfasst:
Erzeugen eines ersten Begrenzungsbereichs, der dem Entwurfsobjekt entspricht;
Erzeugen zweiter Begrenzungsbereiche, von denen jeder jeweils einem der Stücke in dem Entwurfsobjekt entspricht;
Bestimmen unangepasster Abstände zwischen einem ersten Mittelpunkt des ersten Begrenzungsbereichs und zweiten Mittelpunkten der zweiten Begrenzungsbereiche;
Bestimmen von angepassten Positionen der Stücke gemäß angepassten Abständen zwischen dem ersten Mittelpunkt und den zweiten Mittelpunkten, die den unangepassten Abständen entsprechen, wobei die angepassten Abstände relativ zu den unangepassten Abständen vergrößert sind;
Anzeigen der Stücke der Entwurfsobjekte an den angepassten Positionen;
Auswählen von mindestens einem aus einem Stück und einem Entwurfselement basierend auf einer Benutzerauswahleingabe in der Explosionsansicht, in der die Positionen einer Vielzahl der Stücke oder die Positionen der Vielzahl der Entwurfselemente angepasst sind, wobei ein Entwurfselement zumindest ein Teil eines Stücks ist; und
Modifizieren von Entwurfsdaten, die mindestens einem aus dem ausgewählten Stück oder Entwurfselement entsprechen, wobei die Entwurfsdaten Daten über mindestens eines aus einem Muster, einem Material, einem Zusatzmaterial oder einer Maßangabe des ausgewählten Stücks oder des ausgewählten Entwurfselements einschließen.

2. Verfahren nach Anspruch 1, wobei das Anpassen der Positionen das Bestimmen, als die angepassten Abstände, der unangepassten Abständen, vergrößert um Werte, die die ersten Abstände multipliziert mit einem vorbestimmten Verhältnis sind, umfasst.

3. Verfahren nach Anspruch 1, wobei das Anpassen der Positionen umfasst:
Umwandeln der unangepassten Abstände in Einheitsabstände; und
Festlegen der angepassten Abstände basierend auf den Einheitsabständen.

4. Verfahren nach Anspruch 1, wobei das Anpassen der Positionen das Bestimmen der angepassten Abstände basierend auf einer Benutzerauswahleingabe umfasst.

5. Verfahren nach Anspruch 1, weiter umfassend:
Anpassen eines Abstands zwischen einem dritten Mittelpunkt jedes der dritten Begrenzungsbereiche, die jeweils einem einer Vielzahl von Entwurfselementen in einem Stück der Vielzahl der Stücke entsprechen, und einem zweiten Mittelpunkt des Stücks.

6. Verfahren nach Anspruch 5, wobei ein angepasster Abstand zwischen dem ersten Mittelpunkt und einem der zweiten Mittelpunkte so festgelegt ist, dass er größer ist als ein Abstand zwischen dem zweiten Mittelpunkt und dem dritten Mittelpunkt.

7. Verfahren nach Anspruch 1, weiter umfassend:
Wiederherstellen der Vielzahl der Stücke von den angepassten Positionen zu unangepassten Positionen gemäß den unangepassten Abständen als Reaktion auf das Empfangen einer Benutzerauswahleingabe; und
Anzeigen des Entwurfsobjekts und jedes der Stücke in dem Entwurfsobjekt an den unangepassten Positionen.

8. Verfahren nach Anspruch 1, weiter umfassend:
Anzeigen des ausgewählten Stücks oder des ausgewählten Entwurfselements, das gemäß den modifizierten Entwurfsdaten angepasst ist, in Echtzeit.

9. Verfahren nach Anspruch 1, weiter umfassend:
Anzeigen von mindestens einem der Stücke oder einem der Entwurfselemente, das basierend auf der Benutzerauswahleingabe ausgewählt ist, in der Explosionsansicht, in der die Positionen der Vielzahl der Stücke oder die Positionen der Vielzahl der Entwurfselemente angepasst sind.

10. Verfahren nach Anspruch 1, wobei das Anzeigen umfasst:
Anzeigen von mindestens einem der Stücke oder einem der Entwurfselemente, das basierend auf der Benutzerauswahleingabe ausgewählt ist, in der Explosionsansicht, in der die Positionen der Vielzahl der Stücke oder die Positionen der Vielzahl der Entwurfselemente angepasst sind, basierend auf einer verringerten Transparenz.

11. Verfahren nach Anspruch 1, weiter umfassend:
Anzeigen eines Modifikationsobjekts zum Modifizieren von Entwurfsdaten und der Explosionsansicht auf einem Bildschirm; und
Ändern der Explosionsansicht basierend auf einer Modifikation der Entwurfsdaten des Modifikationsobjekts.

12. Nichttransitorisches computerlesbares Speichermedium, das Anweisungen speichert, die, wenn sie von einem Prozessor ausgeführt werden, den Prozessor veranlassen:
einen ersten Begrenzungsbereich zu erzeugen, der einem Entwurfsobjekt entspricht;
zweite Begrenzungsbereiche zu erzeugen, von denen jeder jeweils einem der Stücke in dem Entwurfsobjekt entspricht;
unangepasste Abstände zwischen einem ersten Mittelpunkt des ersten Begrenzungsbereichs und zweiten Mittelpunkten der zweiten Begrenzungsbereiche zu bestimmen; und
angepasste Positionen der Stücke gemäß angepassten Abständen zwischen dem ersten Mittelpunkt und den zweiten Mittelpunkten zu bestimmen, die den unangepassten Abständen entsprechen, wobei die angepassten Abstände relativ zu den unangepassten Abständen vergrößert sind;
die Stücke der Entwurfsobjekte an den angepassten Positionen anzuzeigen;
mindestens eines aus einem Stück und einem Entwurfselement basierend auf einer Benutzerauswahleingabe in der Explosionsansicht auszuwählen, in der die Positionen einer Vielzahl der Stücke oder die Positionen der Vielzahl der Entwurfselemente angepasst sind, wobei ein Entwurfselement zumindest ein Teil eines Stücks ist; und
Entwurfsdaten zu modifizieren, die mindestens einem aus dem ausgewählten Stück oder Entwurfselement entsprechen, wobei die Entwurfsdaten Daten über mindestens eines aus einem Muster, einem Material, einem Zusatzmaterial oder einer Maßangabe des ausgewählten Stücks oder des ausgewählten Entwurfselements einschließen.

13. Elektronische Vorrichtung zum Erzeugen einer Explosionsansicht eines Entwurfsobjekts, wobei die elektronische Vorrichtung einen Prozessor umfasst, wobei der Prozessor konfiguriert ist:
einen ersten Begrenzungsbereich zu erzeugen, der dem Entwurfsobjekt entspricht;
zweite Begrenzungsbereiche zu erzeugen, von denen jeder jeweils einem der Stücke in dem Entwurfsobjekt entspricht;
unangepasste Abstände zwischen einem ersten Mittelpunkt des ersten Begrenzungsbereichs und zweiten Mittelpunkten der zweiten Begrenzungsbereiche zu bestimmen; und
angepasste Positionen der Stücke gemäß angepassten Abständen zwischen dem ersten Mittelpunkt und den zweiten Mittelpunkten zu bestimmen, die den unangepassten Abständen entsprechen, wobei die angepassten Abstände relativ zu den unangepassten Abständen vergrößert sind;
die Stücke der Entwurfsobjekte an den angepassten Positionen anzuzeigen;
mindestens eines aus einem Stück und einem Entwurfselement basierend auf einer Benutzerauswahleingabe in der Explosionsansicht auszuwählen, in der die Positionen einer Vielzahl der Stücke oder die Positionen der Vielzahl der Entwurfselemente angepasst sind, wobei ein Entwurfselement zumindest ein Teil eines Stücks ist; und
Entwurfsdaten zu modifizieren, die mindestens einem aus dem ausgewählten Stück oder Entwurfselement entsprechen, wobei die Entwurfsdaten Daten über mindestens eines aus einem Muster, einem Material, einem Zusatzmaterial oder einer Maßangabe des ausgewählten Stücks oder des ausgewählten Entwurfselements einschließen.

## Revendications

1. Procédé de génération d'une vue éclatée d'un objet de conception, le procédé consistant à :
générer une première zone englobante correspondant à l'objet de conception ;
générer des deuxièmes zones englobantes correspondant chacune à chacune des pièces dans l'objet de conception ;
déterminer des distances non ajustées entre un premier centre de la première zone englobante et des deuxièmes centres des deuxièmes zones englobantes ;
déterminer des positions ajustées des pièces en fonction de distances ajustées entre le premier centre et les deuxièmes centres correspondant aux distances non ajustées, les distances ajustées étant augmentées par rapport aux distances non ajustées ;
afficher les pièces de l'objet de conception aux positions ajustées ;
sélectionner au moins l'un parmi une pièce et un élément de conception sur la base d'une entrée de sélection d'utilisateur dans la vue éclatée dans laquelle les positions d'une pluralité des pièces ou les positions de la pluralité des éléments de conception sont ajustées, dans lequel un élément de conception est au moins une partie d'une pièce ; et
modifier des données de conception correspondant à au moins l'un parmi la pièce sélectionnée ou l'élément de conception sélectionné, dans lequel les données de conception incluent des données concernant au moins l'un parmi un patron, un matériau, une fourniture, ou une mesure de la pièce sélectionnée ou de l'élément de conception sélectionné.

2. Procédé selon la revendication 1, dans lequel l'ajustement des positions consiste à déterminer, en tant que distances ajustées, des distances non ajustées augmentées de valeurs qui sont les premières distances multipliées par un coefficient prédéterminé.

3. Procédé selon la revendication 1, dans lequel l'ajustement des positions consiste :
à convertir les distances non ajustées en distances unitaires ; et
à définir les distances ajustées sur la base des distances unitaires.

4. Procédé selon la revendication 1, dans lequel l'ajustement des positions consiste à déterminer les distances ajustées sur la base d'une entrée de sélection d'utilisateur.

5. Procédé selon la revendication 1, consistant en outre à :
ajuster une distance entre un troisième centre de chacune des troisièmes zones englobantes correspondant chacune à chacun d'une pluralité d'éléments de conception dans une pièce de la pluralité de pièces, et un deuxième centre de la pièce.

6. Procédé selon la revendication 5, dans lequel une distance ajustée entre le premier centre et l'un des deuxièmes centres est définie comme étant supérieure à une distance entre le deuxième centre et le troisième centre.

7. Procédé selon la revendication 1, consistant en outre à :
restaurer la pluralité de pièces depuis les positions ajustées vers des positions non ajustées en fonction des distances non ajustées, en réponse à la réception d'une entrée de sélection d'utilisateur ; et
afficher l'objet de conception et chacune des pièces dans l'objet de conception aux positions non ajustées.

8. Procédé selon la revendication 1, consistant en outre à :
afficher la pièce sélectionnée ou l'élément de conception sélectionné ajusté en fonction des données de conception modifiées en temps réel.

9. Procédé selon la revendication 1, consistant en outre à :
afficher au moins une des pièces ou un des éléments de conception sélectionnés sur la base de l'entrée de sélection d'utilisateur dans la vue éclatée dans laquelle les positions de la pluralité des pièces ou les positions de la pluralité des éléments de conception sont ajustées.

10. Procédé selon la revendication 1, l'affichage consistant à :
afficher au moins une des pièces ou un des éléments de conception sélectionnés sur la base de l'entrée de sélection d'utilisateur dans la vue éclatée dans laquelle les positions de la pluralité des pièces ou les positions de la pluralité des éléments de conception sont ajustées sur la base d'une transparence diminuée.

11. Procédé selon la revendication 1, consistant en outre à :
afficher un objet de modification pour modifier des données de conception et la vue éclatée sur un écran ; et
modifier la vue éclatée sur la base d'une modification des données de conception de l'objet de modification.

12. Support de stockage non transitoire lisible par ordinateur stockant des instructions qui, lorsqu'elles sont exécutées par un processeur, amènent le processeur à :
générer une première zone englobante correspondant à un objet de conception ;
générer des deuxièmes zones englobantes correspondant chacune à chacune des pièces dans l'objet de conception ;
déterminer des distances non ajustées entre un premier centre de la première zone englobante et des deuxièmes centres des deuxièmes zones englobantes ; et
déterminer des positions ajustées des pièces en fonction de distances ajustées entre le premier centre et les deuxièmes centres correspondant aux distances non ajustées, les distances ajustées étant augmentées par rapport aux distances non ajustées ;
afficher les pièces de l'objet de conception aux positions ajustées ;
sélectionner au moins l'un parmi une pièce et un élément de conception sur la base d'une entrée de sélection d'utilisateur dans la vue éclatée dans laquelle les positions d'une pluralité des pièces ou les positions de la pluralité des éléments de conception sont ajustées, dans lequel un élément de conception est au moins une partie d'une pièce ; et
modifier des données de conception correspondant à au moins l'un parmi la pièce sélectionnée ou l'élément de conception sélectionné, dans lequel les données de conception incluent des données concernant au moins l'un parmi un patron, un matériau, une fourniture, ou une mesure de la pièce sélectionnée ou de l'élément de conception sélectionné.

13. Dispositif électronique pour générer une vue éclatée d'un objet de conception, le dispositif électronique comprenant un processeur, le processeur étant configuré pour :
générer une première zone englobante correspondant à l'objet de conception ;
générer des deuxièmes zones englobantes correspondant chacune à chacune des pièces dans l'objet de conception ;
déterminer des distances non ajustées entre un premier centre de la première zone englobante et des deuxièmes centres des deuxièmes zones englobantes ; et
déterminer des positions ajustées des pièces en fonction de distances ajustées entre le premier centre et les deuxièmes centres correspondant aux distances non ajustées, les distances ajustées étant augmentées par rapport aux distances non ajustées ;
afficher les pièces de l'objet de conception aux positions ajustées ;
sélectionner au moins l'un parmi une pièce et un élément de conception sur la base d'une entrée de sélection d'utilisateur dans la vue éclatée dans laquelle les positions d'une pluralité des pièces ou les positions de la pluralité des éléments de conception sont ajustées, dans lequel un élément de conception est au moins une partie d'une pièce ; et
modifier des données de conception correspondant à au moins l'un parmi la pièce sélectionnée ou l'élément de conception sélectionné, dans lequel les données de conception incluent des données concernant au moins l'un parmi un patron, un matériau, une fourniture, ou une mesure de la pièce sélectionnée ou de l'élément de conception sélectionné.
